Europäisches Patentamt

European Patent Office

Office européen des brevets

(11) Publication number: **0 469 194 A1**

# EUROPEAN PATENT APPLICATION

(21) Application number: **90203500.5**

(22) Date of filing: **24.12.90**

(51) Int. Cl.⁵: **B60J 5/06**

(30) Priority: **26.07.90 IT 2107990**

(43) Date of publication of application:
**05.02.92 Bulletin 92/06**

(84) Designated Contracting States:
**AT BE CH DE DK ES FR GB GR LI LU NL SE**

(71) Applicant: **SO.C.I.MI SOCIETA COSTRUZIONI INDUSTRIALI MILANO S.P.A.**
**Via Varesina 115**
**I-20156 Milan(IT)**

(72) Inventor: **Marzocco, Alessandro**
**Viale Monte Rosa 48**
**I-20149 Milan(IT)**

(74) Representative: **De Carli, Erberto et al**
**ING. BARZANO' & ZANARDO MILANO S.p.A.**
**Via Borgonuovo, 10**
**I-20121 Milano(IT)**

(54) Single-leaf door for passenger transport vehicles.

(57) In a passenger transport vehicle a single-leaf door (11) is provided slidable between a closed position and an open position, guided upperly by a jointed tubular element (21) and lowerly by a guide element (31) engaged with the lower edge of the door leaf, the upper and lower guide elements being connected together by a shaft (25) with a vertical axis of rotation and being engaged via a suitable connecting rod with a screw-and-nut system (34) which also provides the door leaf with its translational movement for moving from the closed position to the open position and vice versa.

Fig.1

This invention relates to a single-leaf door for passenger transport vehicles.

Many types of doors are known for vehicles used for public passenger transport, the most common of which comprise a pair of doors opened by sliding or by folding, and generally containing numerous mechanical moving parts.

However, doors of the folding type generally open inwards, and although occupying a small space still reduce the access opening to the vehicle.

In modern passenger transport vehicles there is also a need for vehicle operating economy, with wide access openings which allow disabled passengers to enter as well as normal passengers. The object of the present invention is to provide a single-leaf door for passenger transport vehicles which combines simplicity of its operating and guide members with excellent reliability and operating safety, while at the same time limiting its maintenance and hence costs because of the small number of mechanical moving parts and the corresponding small number of spares which need to be held.

This object is attained by a single-leaf door for passenger transport vehicles, in which said door leaf, which defines an upper edge and a lower edge, is slidingly mounted on a vehicle body and mobile between a closed position and an open position by interconnected guide and drive means, said door leaf being provided with seal gaskets, characterised in that said guide means consist upperly of a tubular element provided with three hinging points, of which two are located in proximity to its ends and one is located in a middle position, said hinging points having a vertical axis of rotation to enable said tubular element to assume a deflected configuration outwards of said vehicle body; on said tubular element there engaging a pair of bearings fixed to the ends of the upper edge of said door leaf, said door leaf being connected by a first shaped connecting rod to a rotatable shaft of vertical axis provided lowerly with a second connecting rod carrying at its free end a guide element engaged in a seat provided along the lower edge of said door leaf, on said first connecting rod there being provided means for screw engagement with one end of a lead screw rotated by a motor, said lead screw carrying at its other end a mechanical coupling device engaged with an element fixed to one of said bearings provided on the upper edge of said door leaf and able to transmit to this latter the translational movement for the opening and closure of said door.

The structural and operational characteristics and advantages of a single-leaf door according to the present invention will be more apparent from the description given hereinafter by way of nonlimiting example with reference to the accompanying schematic drawings in which:

Figure 1 is a side view of the single-leaf door of the present invention seen from the inside, and showing two door positions;

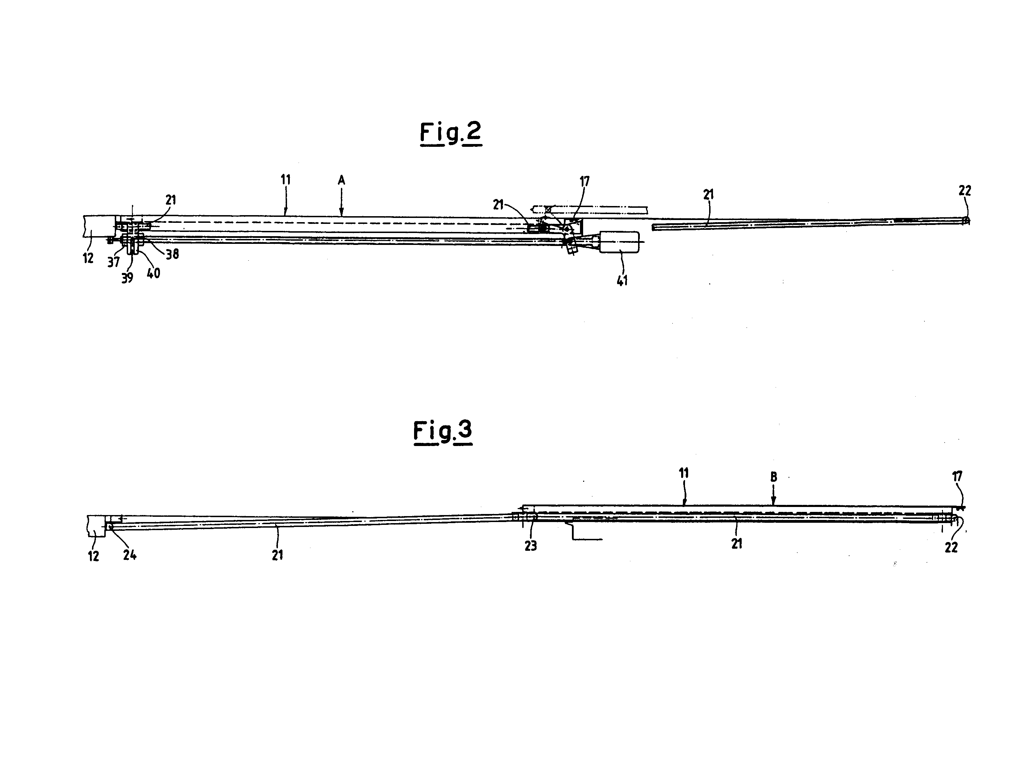

Figure 2 is a schematic plan view of Figure 1 with the door closed;

Figure 3 is a schematic plan view of Figure 1 with the door open;

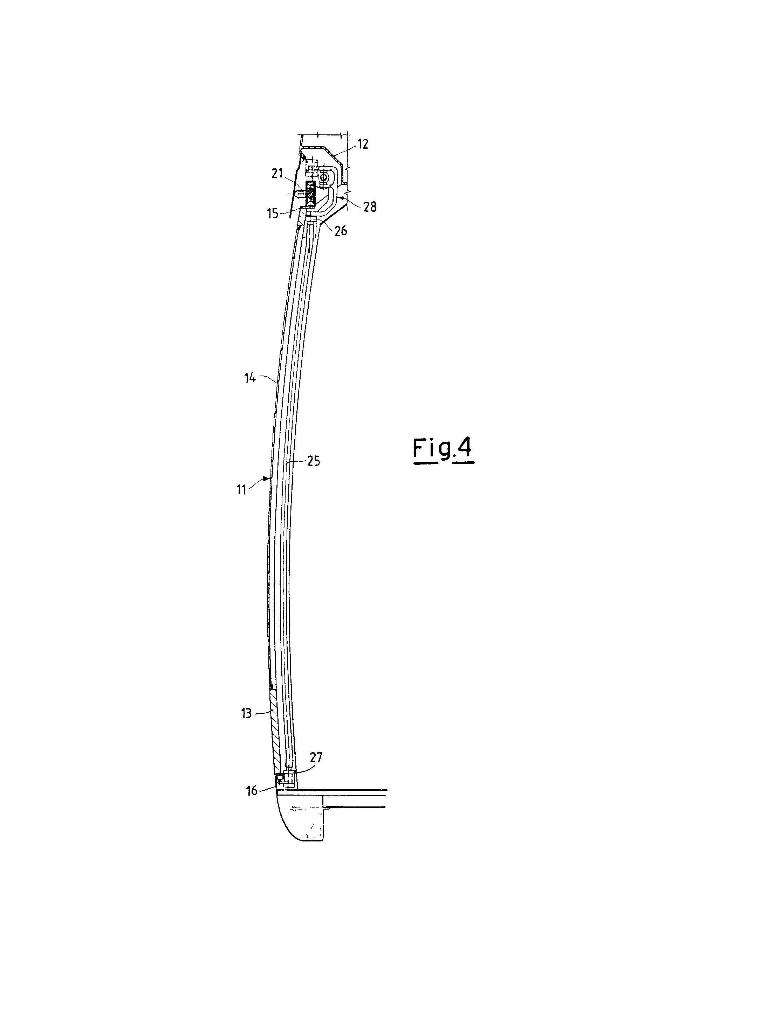

Figure 4 is a section on the line IV-IV of Figure 1; and

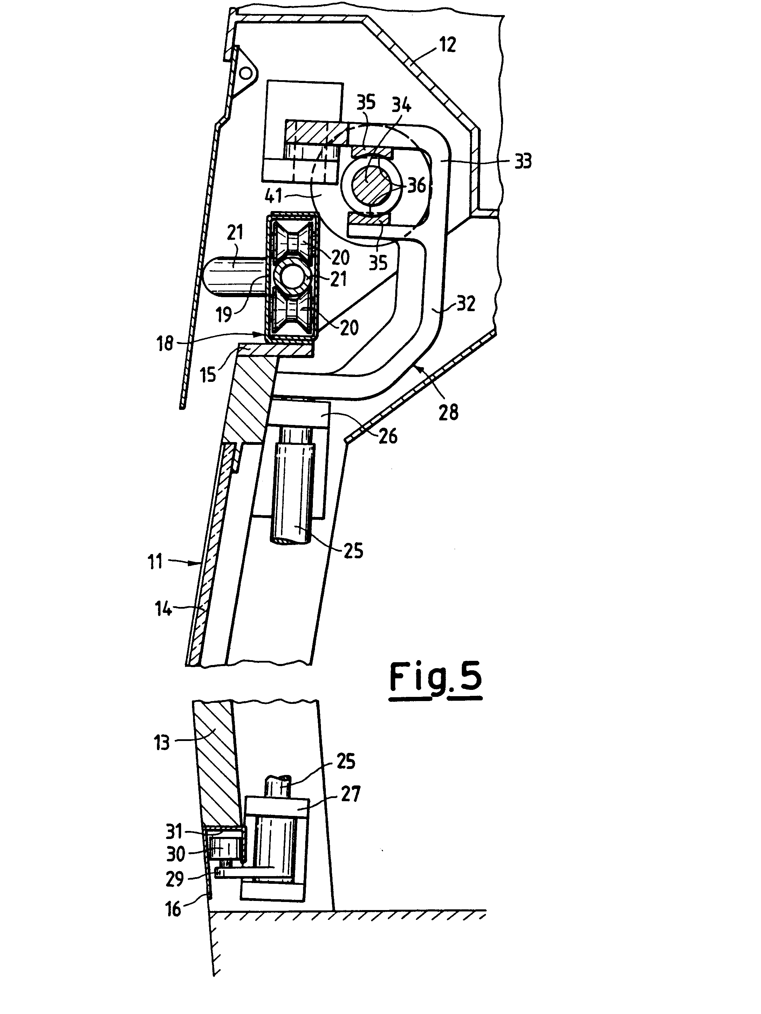

Figure 5 shows two enlarged details of the upper and lower end portions of the view of Figure 4.

In the figures, the reference numeral 11 indicates overall a door according to the invention slidingly fixed to the body 12 of a passenger transport vehicle.

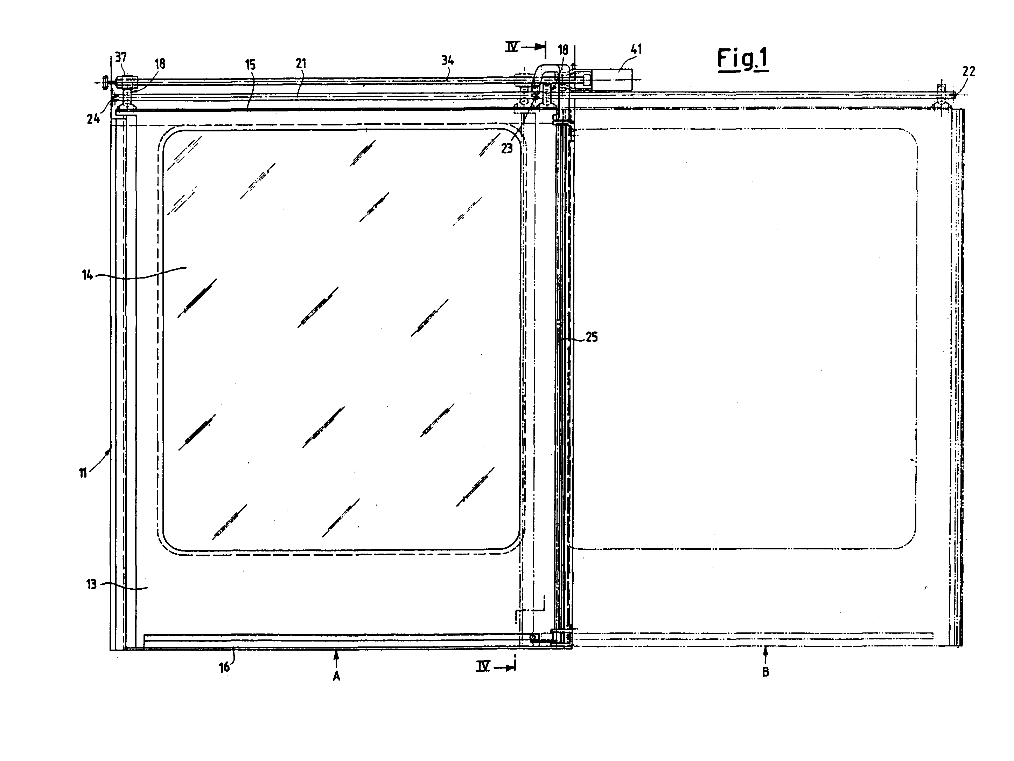

The door 11 consists of a door leaf 13 generally provided with a glazed portion 14 and sliding between a closed position and an open position indicted respectively by A and B in Figure 1. The door leaf 13, which defines an upper edge 15 and a lower edge 16, is provided along its inner perimeter with a seal gasket 17. On the upper edge 15 of the door leaf 13 there are provided two bearings 18 disposed at its ends and rigid with it, and consisting of supports 19 carrying a pair of biconical rollers indicated by 20.

The bearings 18 engage their rollers 20 on a tubular guide element 21 having three hinging points indicated at 22, 23 and 24. The hinging points 22 and 24 are fixed relative to the vehicle body 12 and are positioned at the ends of the tubular guide element 21. The hinging point 23 is positioned in the middle region of the tubular guide element to allow it to undergo a deflection movement towards the outside of the vehicle body.

Vertically to the side of one side end of the door leaf 13 there is provided a shaft 25 of vertical axis rotatably engaged with this latter by means of the supports 26 and 27. To the upper end of the shaft 25 there is fixed a first shaped connecting rod 28, and to its lower end there is fixed a second connecting rod 29 provided at its free end with a guide element 30 engaged in a seat 31 provided along the lower edge 16 of the door leaf 13. The first connecting rod 28 consists of a substantially L-shaped element having an arm 32 terminating in a portion 33 of C section. The portion 33 is engaged with one end of a lead screw 34 positioned horizontally, longitudinally to the upper edge of the door leaf. The engagement is achieved by a pair of elements 35 arranged within the portion 33 and provided with mechanical connection means 36. The connection means 36 are substantially an internal thread which together with the lead screw enables a rotary movement to be transmitted to the connecting rod 28 and hence to the shaft 25 and to the connecting rod 29. At the other end of the lead screw 34 there is provided a mechanical circulating-ball coupling 37 provided upperly with a pin 38 on which there engages a slot 39 provided in a bracket 40 fixed to one of the bearings 18.

The lead screw 34 is driven by a motor 41 provided in the upper part of the vehicle body 12 and connected to controls (not shown) available to the vehicle driver.

When the control for opening the single-leaf door of the invention is operated, the motor 41 rotates to rotate the lead screw 34, which is engaged with the elements 35 provided within the end portion of the connecting rod 28. This engagement transmits to the connecting rod 28 and hence to the shaft 25 to which it is connected a rotary movement which because of the L-shape of the connecting rod 28 causes the door leaf 13 to separate from the vehicle body 12 by moving outwards and consequently causing the tubular guide element 21 to assume an outwardly deflected configuration with its vertex in its middle region where the hinging point 23 is provided, and in proximity to which there is positioned one of the bearings 18 fixed to the upper edge of the door leaf.

During this rotary movement the connecting rod 29 fixed to the bottom of the shaft 25 also moves outwards to allow the guide element 30, engaged with the seat 31, to guide the lower edge 16 of the door leaf in a manner similar to and simultaneously with the upper edge.

As the rotation of the lead screw 34 continues, the mechanical circulating-ball coupling 37 moves along it. Consequently the pin 38 provided on this latter and engaged with the slot 39 in the bracket 40 drags the bearing 18 to translationally move the door leaf, which is guided by the bearings 18 along the tubular guide element 21 which has assumed the deflected configuration, and is also guided by the element 30 engaged with the seat 31.

By reversing the rotation of the motor using the usual controls available to the driver, the door leaf can be returned to its closed position.

As an alternative to this type of operation, controls can be provided on the outside of the vehicle body, to be operated by the passengers from the outside of the vehicle.

Safety devices are provided for locking the door, these devices according to a preferred embodiment (not shown) being in the form of an electromagnetic brake positioned on the drive motor to ensure that the door remains locked in its closed position.

The usual devices for determining the presence of obstacles along the door closure path are provided both on the door leaf edges and on the vehicle body uprights to prevent the door not closing correctly or prevent a passenger being trapped between the door leaf and an upright.

## Claims

1. A single-leaf door for passenger transport vehicles, in which said door leaf, which defines an upper edge and a lower edge, is slidingly mounted on a vehicle body and mobile between a closed position and an open position by interconnected guide and drive means, said door leaf being provided with seal gaskets, characterised in that said guide means consist upperly of a tubular element provided with three hinging points, of which two are located in proximity to its ends and one is located in a middle position, said hinging points having a vertical axis of rotation to enable said tubular element to assume a deflected configuration outwards of said vehicle body; on said tubular element there engaging a pair of bearings fixed to the ends of the upper edge of said door leaf, said door leaf being connected by a first shaped connecting rod to a rotatable shaft of vertical axis provided lowerly with a second connecting rod carrying at its free end a guide element engaged with a seat provided along the lower edge of said door leaf, on said first connecting rod there being provided means for screw engagement with one end of a lead screw driven by a motor, said lead screw carrying at its other end a mechanical coupling device engaged with an element fixed to one of said bearings provided on the upper edge of said door leaf and able to transmit to this latter the translational movement for the opening and closure of said door.

2. A single-leaf door as claimed in claim 1, characterised in that said bearings of said pair consist of supports comprising a pair of biconical rollers engaged with said tubular guide element, said rollers being on opposite sides of said element.

3. A single-leaf door as claimed in claim 1, characterised in that said first shaped connecting rod consists of an essentially L-shaped element.

4. A single-leaf door as claimed in claim 1, characterised in that said engagement means provided on said first connecting rod consist of a portion of C-section disposed at the end of an arm of said first connecting rod, said portion being provided internally with elements mechanically engaged with said lead screw, to transmit a rotary movement of essentially vertical axis to said first connecting rod.

5. A single-leaf door as claimed in claim 1, characterised in that said mechanical coupling device provided at the other end of said lead screw is a circulating-ball device.

6. A single-leaf door as claimed in claim 1, characterised in that said lead screw is a long-pitch screw.

7. A single-leaf door as claimed in claim 1, characterised in that said mechanical coupling device provided at the other end of said lead screw is provided upperly with a pin engaged with a slot in a bracket fixed to one of said bearings.

Fig.1

## Fig.2

## Fig.3

EP 0 469 194 A1

Fig.4

**Fig.5**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-1 358 198  (GESELLSCAFT FÜR DIE ENTWIC-KLUNG VON VERKEHRSMITTELN)<br>– – – | 1 | B 60 J 5/06 |
| A | FR-A-2 133 309  (FAIVELEY)<br>* page 5, line 9 - line 15; figure 1 * *<br>– – – | 1 | |
| A | FR-A-2 589 938  (FAIVELEY)<br>* page 6, line 7 - line 15; figure 1 * *<br>– – – – – | 1 | |

|  |  | | TECHNICAL FIELDS SEARCHED (Int. Cl.5) |
|---|---|---|---|
| | | | B 60 J<br>B 61 D<br>E 05 D |

The present search report has been drawn up for all claims

| Place of search | Date of completion of search | Examiner |
|---|---|---|
| The Hague | 15 November 91 | FOGLIA A. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document